# EUROPEAN PATENT APPLICATION

(11) **EP 3 511 763 A1**
(43) Date of publication of application: **17.07.2019**
(21) Application number: 16915812.8
(22) Date of filing: 14.11.2016
(51) Int. Cl.: G02B 27/22, G06T 19/00, G02B 27/01

(54) **REFLECTIVE LENS MODULE**

(30) Priority: 07.09.2016 KR 20160114943
(71) Applicant: Letinar Co., Ltd, Seoul 04763 (KR)
(72) Inventor: HA, Jeong Hun, Seoul 03711 (KR)
(74) Representative: Taor, Simon Edward William
(86) International application number: PCT/KR2016/013095
(87) International publication number: WO 2018/048017

(57) **Abstract**

The present invention relates to a reflective lens module, and more particularly, to a reflective lens module capable of providing an image having a deep depth of field to a user. The reflective lens module according to the present invention for reflecting an image outputted from a display unit to provide the reflected image to a user may include at least one reflective unit having a size of 4 mm or less for reflecting an image outputted from the display unit.

## Description

### Technical Field

The present invention relates to a reflective lens module, and more particularly, to a reflective lens module capable of providing an image having a deep depth of field to a user.

### Background Art

An augmented reality (AR) is a technology for enabling a user to see a virtual screen (virtual world) superimposing a real world which the user sees with eyes. Because a single image is displayed by combining the real world with the virtual world having additional information in real time, the AR has been called a mixed reality in the early stage.

The AR has begun to be studied starting with the development of a see-through head mounted display (HMD), and the AR has a meaning different from a virtual reality (VR). Whereas the user cannot see the actual environment because the VR leads the user to be immersed in a virtual environment, the AR allows the user to see the actual environment, and has the form of mixing the actual environment with a virtual object. In other words, there is a difference in that the VR shows the virtual world to the user by replacing the real world, however, the AR shows the real world to the user by supplementing the real world by superimposing the virtual object on the real world.

The HMD is mainly used to realize the AR, however, a lens module (an optical system module) of the HMD has a problem in that it is very difficult to manufacture the lens module due to a complicated structure, and the lens module has a large size and heavy weight due to the complicated structure, which causes the user to feel uncomfortable for wearing the HMD.

Although the conventional lens module for realizing the AR has a complicated structure, there is a problem as well as the above problem in that the conventional lens module fails to provide the user with a constantly clear virtual screen.

As described above, the AR is the technology for enabling the virtual screen to be superimposed and simultaneously recognized when the user recognizes the real world. When the user recognizes (looks at) the real world,
if the user focuses on where the user wants by focusing on far away or close distance (if the user changes a focal distance), the virtual screen may look blurry or clear. In other words, because the focus of the lens module for providing (reflecting) the virtual screen is fixed, the user may see a clear virtual screen only when the focus is in while changing the focal distance, however, when it is out of focus, the user sees a blurred (unclear) virtual screen. As one of conventional arts to solve the above problems, reference document 1 (KR 10-2015-0116142) discloses a focus-adjustable optical system module for a head mounted display. More particularly, the focus-adjustable optical system module for a head mounted display of reference document 1 discloses the configuration including: a screen transfer lens for receiving a virtual screen from a display panel, total-internal-reflecting the received virtual screen, and transferring the virtual screen to a next optical system; an adjusting prism for receiving the virtual screen transferred from the screen transfer lens, and adjusting the focus through reflecting the virtual screen by adjusting an angle so as to transfer the virtual screen to the next optical system; and a combiner for reflecting the virtual screen transferred from the adjusting prism and combining the real screen from the outside so as to transfer the combined screen to wearer's eyes.

Although the focus-adjustable optical system module for the HMD of reference document 1 is capable of a focus adjustment. However, the focus adjustment means that the user adjusts the focus and focuses on (fixes) one of views at which the user mainly looks, so it totally fails to solve the problem pointed out above in that the user obtains the unclear virtual screen when changing the focal distance while gazing at the real world.

In addition, as one of conventional arts to solve the above problems, reference document 2 (KR 10-2013-0126623) discloses an augmented reality system and a method of providing an improved focus. More particularly, the augmented reality system and the method of providing the improved focus of reference document 2 discloses the configuration including: a processor for determining a current user focus area under control of software; and a focus area adjustment unit for focusing a variable focus lens within the current user focus area under control of the processor. The augmented reality system and the method of providing the improved focus of reference document 2 totally fails to solve the above problems by physical scheme, and an additional processor is required to determine the current user focus area. Because additional software is required to control the processor, there are problems in that the software and processor may have malfunctions and errors, and that the manufacturing cost is high due to the additional installation of the processor and the software.

### Disclosure

### Technical Problem

The present invention is disclosed to solve the above-described problems and necessities. The present invention provides a reflective lens module capable of providing an image having a deep depth of field to a user.

As described above, because the AR has a technical feature of enabling the user to recognize the virtual screen superimposing on the real world, it is required to change the focal distance of the image as the user changes the focal distance while gazing at the real world so as to enable the clear image to be always recognized to the user.

The problems of the focal distance may be solved by providing an image having a deep depth of field. The depth of field refers to a range where an image (an image which the user obtains with eyes) is recognized as being in focus. Accordingly, the range recognized as being in focus is narrow when the depth of field is low, and the range recognized as being in focus is wide when the depth of field is deep.

Therefore, when the image having the deep depth of field is provided to the user, a clear image may be obtained within a range where the provided image is recognized as being in focus even if the user changes the focal distance while gazing at the real world. In other words, because the range recognized as being in focus is wide when the depth of field is deep (because the focus is recognized as being in focus even if the focal distance is changed within the above range), a clear image may be obtained even if the user changes the focal distance to some extent.

Herein, when the depth of filed is infinitely deep, because the range recognized as being in focus is nearly infinite, the clear virtual screen may be obtained at any time even if the user freely adjusts the focal distance.

### Technical Solution

The feature of the present invention for realizing the above object of the present invention and implementing the effect of the present invention is as follows.

The reflective lens module according to the present invention for reflecting an image outputted from a display unit to provide the reflected image to a user may include at least one reflective unit having a size of 4 mm or less for reflecting an image outputted from the display unit.

In addition, a frame unit for fixing the at least one reflective unit may be further included.

In addition, a transparent lens unit where visible rays pass through may be further included, and the at least one reflective unit may be installed outside or inside the transparent lens unit.

In addition, the at least one reflective unit may be dented and installed inside the transparent lens unit.

In addition, the at least one reflective unit may be formed of a metal.

In addition, the at least one reflective unit may be formed of an optical element.

In addition, the at least one reflective unit may be formed in an edgeless shape.

In addition, the at least one reflective unit may be formed in a circular or oval shape.

In addition, a surface of the at least one reflective unit may be formed in a curved shape.

### Advantageous Effects

By using the above configuration, the reflective lens module according to the present invention can provide an image having a deep depth of field to a user. Accordingly, when the user look at the real world, a clear image can be always obtained regardless of the focal distance even if the user adjusts the focal distance.

In addition, due to the above configuration, the reflective lens module according to the present invention may have a simple configuration as a whole. Therefore, manufacturing costs can be reduced, the lens module can be easily applied to the HMD, glasses, and so on, the weight can be lighter, and the volume can be smaller.

In addition, with the above configuration, the reflective lens module according to the present invention enables the user to obtain a clear image regardless of the user's eyesight.

### Brief description of the drawings

FIG. 1 is a schematic view showing the configuration of a reflective lens module according to the present invention.
FIGS. 2A and 2B show views describing the principle capable of viewing a clear image when an image is viewed through a pinhole lens.
FIG. 3 is a view describing a pinhole effect of a reflective lens module according to the present invention.
FIGS. 4 to 6 are views comparing an image obtained using a reflective lens module according to the present invention with an image obtained using a conventional reflective lens module.

### Best Mode

The following detailed description of the invention refers to the accompanying drawings for illustrating specific embodiments by way of example in which the invention may be carried out. The embodiments are described in detail enough to enable those skilled in the art to carry out the invention. It should be understood that the various embodiments of the present invention may be different from each other but does not need to be mutually exclusive. For example, the particular shapes, structures, and features described herein may be embodied in other embodiments without departing from the idea and scope of the invention in connection with one embodiment. In addition, it should be understood that the location or arrangement of an individual element within each disclosed embodiment may be modified without departing from the idea and scope of the present invention. Accordingly, the following detailed description is not intended to disclose a limited meaning, and the scope of the invention is limited only by the appended claims, along with the full scope of equivalents to which the claims are entitled, if properly explained. Similar reference numerals in the drawings refer to the same or similar functions throughout several aspects.

The term including an ordinal number such as first and second may be used to describe various elements, however, the elements are not limited by the terms. The terms are used only for the purpose of distinguishing one element from another element. For example, the first element may be referred to as the second element without departing from the scope of the present invention, and similarly, the second element may also be referred to as the first element. The term "and/or" includes a combination or any one of a plurality of related listed items.

Meanwhile, the term used herein is just for the purpose of describing a particular embodiment and is not intended to limit the invention. The singular expression includes a plural expression unless the context clearly means otherwise. In addition, it should be understood that the term such as "include" and "have" in the present invention is intended to designate the presence of feature, number, operation, element, component, and the combination thereof recited in the specification, which does not preclude the possibility of the presence or addition of one or more other features, numbers, steps, operations, elements, components, or combinations thereof.

Unless otherwise defined, all terms used herein including technical or scientific terms have the same meaning as commonly understood by those having ordinary skill in the art to which the invention belongs. Terms such as those defined in generally used dictionaries should be interpreted to have the meaning consistent with the meaning in the context of the related art, and it should not be interpreted as an ideal or excessively formal meaning unless expressly defined in the present invention.

Hereinafter, preferred embodiments of the present invention will be described in detail with reference to the accompanying drawings, so that the present invention may be easily carried out by those having ordinary skill in the art.

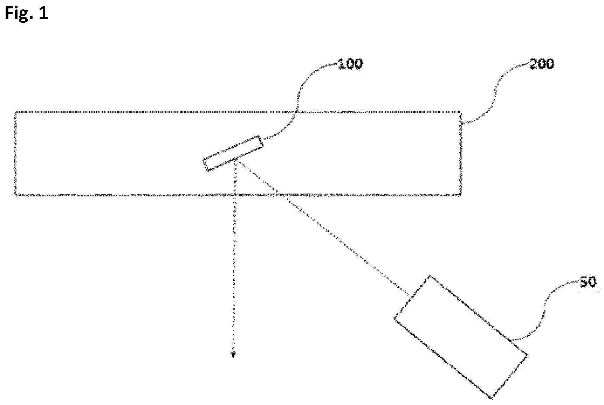

FIG. 1 is a schematic view showing the configuration of a reflective lens module according to the present invention. Referring to FIG. 1, the reflective lens module according to the present invention may include a reflective unit 100 having a size of 4 mm or less for reflecting an image outputted from a display unit 50, and further include a transparent lens unit 200 and a frame unit (not shown) if necessary. FIG. 1 is for the purpose of comprehension of the present invention, and the position of the display unit 50 and the size of the reflective unit 100 are expressed somewhat differently from the actual position and size. For example, the display unit 50 may be positioned on a side of the reflective unit 100, and because the size of the reflective unit 100 is 4 mm or less, the size thereof is very small to be identified by naked eyes. However, the size of the reflective unit 100 is slightly exaggerated to facilitate understanding of the present invention.

The display unit 50 is an element for outputting an image and is not directly included in the elements of the present invention, however, the display unit 50 may be configured in the form of an HMD together with a frame unit (not shown) which may be worn like a pair of glasses by the user. Herein, the image is the concept including all the visual factors outputted by the display unit 50 and including both a still image and a moving image. For example, the image may be the moving image when the display unit 50 outputs a predetermined moving image, and the image may be the still image when the display unit 50 outputs a still image. When the lens module according to the present invention is applied to the augmented reality, the image reflected by the display unit 50 may be a virtual screen.

The reflective unit 100 reflects an image outputted from the display unit 50, and it is preferable that the reflected image is configured to reach the user's eyes. In addition, the size of the reflective unit 100 is preferably 4 mm or less. The size of the reflective unit 100 is configured to be smaller than the size of a human pupil. The size of the human pupil is generally known to be 2 mm to 6 mm. Because each person has a different size of the pupil, it is preferable that the size of the reflective unit 100 is equal to or less than 4 mm which is the average size of the pupils.

In addition, the reflective unit 100 may have a size of 2 mm or less. Because the size of the human pupil is generally known to be 2 mm to 6 mm, the reflective unit 100 may be formed smaller than the human pupil at any time when the size of the reflective unit 100 is formed to 2 mm or less.

In addition, preferably, the reflectance of the reflective unit 100 is 100%, for this end, the reflective unit 100 may be formed of a metal. For example, the reflective unit 100 may be formed of aluminum (Al) or silver (Ag), otherwise, various kinds of metals, alloys or synthetic resins may be used.

In addition, the reflective unit 100 may be formed of optical elements having various materials. For example, the reflective unit 100 may be formed of a holographic optical element, so that diffraction grating reflection is implemented. Herein, the image obtained by the user has a holographic form. In addition, other types of elements other than the holographic optical element may be used, so that the diffraction grating reflection is implemented.

Because the size of the virtual screen reflected by the reflective unit 100 is smaller than the size of the pupil, images may be accurately transferred on the retina regardless of the shape or thickness of the crystalline lens. Therefore, the user may constantly obtain a clear virtual screen (the virtual screen reflected on the reflective unit 100) regardless of the user's eyesight.

Considering another aspect of the reflective unit 100 having the above features, the reflective unit 100 according to the present invention may also serve as an element causing a pinhole effect.

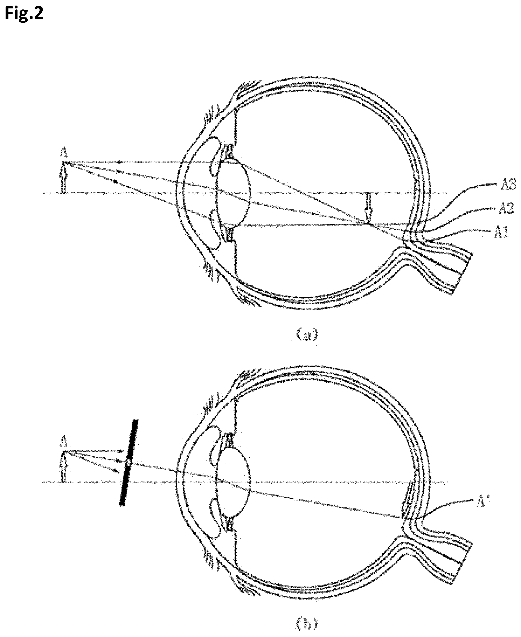

FIGS. 2A and 2B are views describing the principle capable of viewing a clear image when an image is viewed through a pinhole lens. FIG. 2A shows the reason why an object looks blurred when a near-sighted person views the object with naked eyes. With the nearsightedness, a focus is transferred in front of the retina because of the thick crystalline lens, so that the object looks blurred because the image of the object is diffused without being transferred at one point of the retina. Referring to FIG. 2A, the light A starting from the object is diffused and transferred to AI, A2, and A3 on the retina.

FIG. 2B shows the reason why the object looks clear when a near-sighted person wears a pinhole lens. Because the light starting from the object is limited while passing through the pinhole, and the light is transferred on a relatively narrow area of the retina, the object looks clearer comparing with the naked eyes. Referring to FIG. 2B, the light A starting from the object is transferred on the retina relatively narrowly (see A' in FIG. 2B). Only when considering the above phenomenon, the conventional problem may be solved by allowing the virtual screen outputted from the display unit 50 to pass through the pinhole to reach the eyes, however, another problem arises in the case of the pinhole. Herein, the another problem refers to the diffraction phenomenon, in which there is a limitation to form a clear image because the light passing through the pinhole is diffused. Further, due to the pinhole effect, the clearness of the image increases as the pinhole becomes smaller, however, the diffraction also increases as the pinhole becomes smaller, so there is a limitation in use of the pinhole.

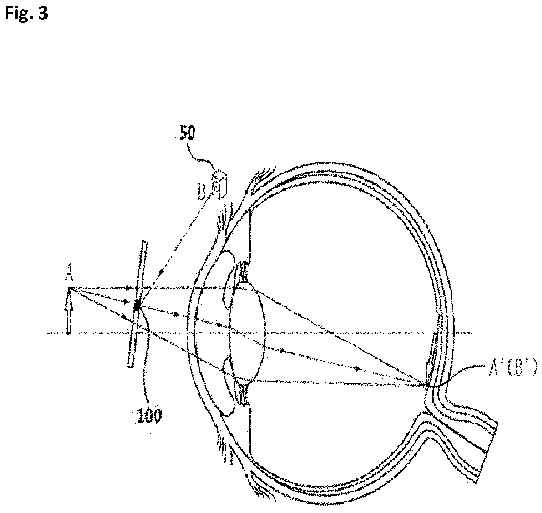

In the present invention, the use of the reflective unit 100 having a small size (4 mm or less) is employed in order to prevent the diffraction phenomenon while limiting the width of light like the pinhole. FIG. 3 is a view describing how an image of a virtual screen is transferred on the retina through a lens module for implementing a virtual reality according to the present invention. FIG. 3 shows that the light A starting from an object in the real world is transferred on A' in the retina, and the light B starting from the display unit 50 is reflected on the reflective unit 100 and then transferred on B' in the retina. In the case of FIG. 3, because A' and B' are transferred on one point in the retina, the image of the real world and the virtual image are clearly viewed without separately focusing the eyes.

Herein, the light A starting from the object may vary in position of the image transferred on the retina as the user adjusts the focal distance, because the thickness of the crystalline lens varies as the user adjusts the focal distance. However, because the light B starting from the display unit 50 is always constantly transferred on B' even if the user adjusts the focal distance and the thickness of the crystalline lens is changed, the user may constantly obtain a clear virtual screen.

In this way, the reflective unit 100 according to the present invention has a size of 4 mm or less, so that the user may constantly obtain a clear virtual screen, which means that the depth of field of the virtual screen provided to the user is very deep.

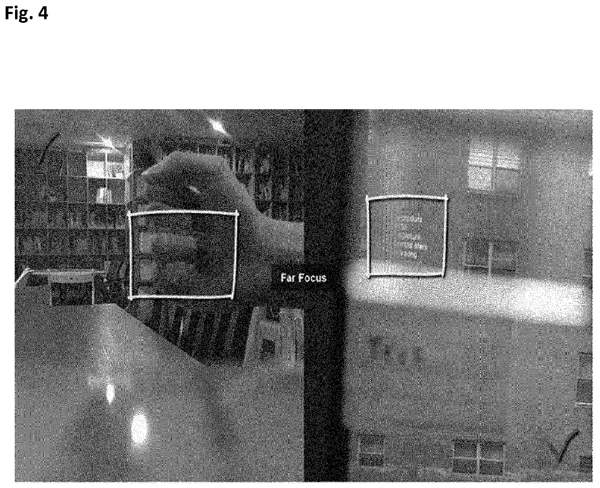

FIGS. 4 to 6 are views comparing an image obtained using a reflective lens module according to the present invention with an image obtained using a conventional reflective lens module. In FIGS. 4 to 6, left sides are images obtained using the reflective lens module according to the present invention, and right sides are images obtained using the conventional reflective lens module. The virtual screens outputted from the display unit 50 are displayed in the squares of FIGS. 4 to 6.

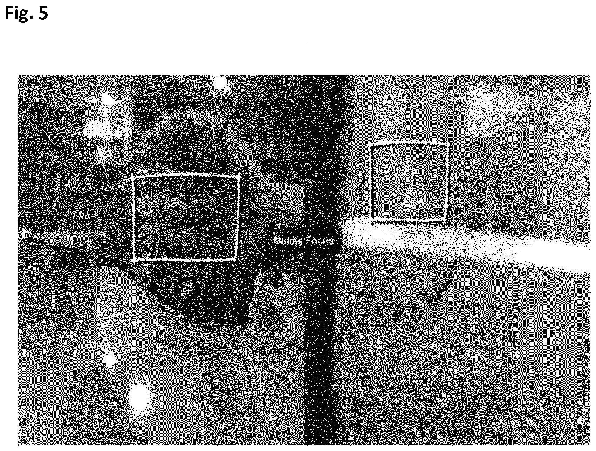

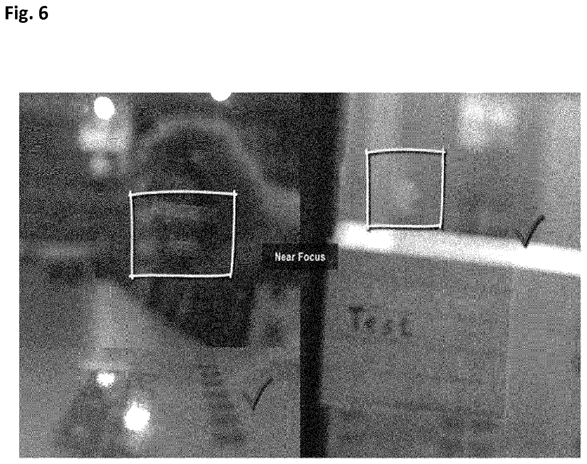

FIG. 4 shows the far focus, FIG. 5 shows the middle focus, and FIG. 6 shows the near focus. As shown in FIGS. 4 to 6, it is confirmed that the image of the real world looks clear only at a portion where the focus matches and looks blurred at a portion where the focus does not match as the focus changes in the order of far focus, middle focus, and near focus in both of the left and right sides of the FIGS. 4 to 6.

Herein, the virtual screens in the square among the images of the right sides obtained using the conventional reflective lens module are clear only when the focus is far away, and the virtual screens inside the square become blurred as the focus moves closer. On the contrary, the virtual screens inside the square among the images of the left sides obtained using the reflective lens module according to the present invention are clear in any case that the focus is far away, meddle, or near.

As described above, the reflective lens module according to the present invention may provide a virtual screen having a deep depth of field to the user. Accordingly, when the user looks at the real world, a clear virtual screen may be always obtained regardless of the focal distance even if the user adjusts the focal distance.

The above result may be obtained when the size of the reflective unit 100 according to the present invention is 2 mm or less. However, to be more effective, the size of the reflective unit 100 is preferably 50 µm to 700 µm.

In addition, the reflective unit 100 is preferably formed in a circular shape, in which it may be formed in an oval shape other than a complete circular shape if necessary. As described above, the reflective unit 100 is preferably formed in a circular or oval shape, however, it may be applied in a modified form if necessary. For example, when the cylindrical shape is cut into an oblique line, an oval shape may be formed, in which the oval shape may not exactly match with the mathematically defined ellipse.

In other words, the reflective unit 100 of the present invention may have various shapes other than an edgeless shape, so any shape may be applicable as long as the shape achieves the object to prevent the diffraction phenomenon while achieving the above pinhole effect. For example, the oval shape which does not have any edge may prevent the diffraction phenomenon while achieving the pinhole effect.

In addition, a surface of the reflective unit 100 may be formed in a curved shape, in which the curved surface may have a concave shape, and it may have a convex shape if necessary.

The reflective lens module according to the present invention may include at least one reflective unit 100 having the above features. In other words, one reflective unit 100 may be included or more than one reflective units 100 may be included if necessary. When more than one reflective units 100 are included, each of the reflective unit 100 reflects each image from the display unit 50 (herein, two or more display units 50 may be included) to allow the user to obtain various images. In addition, a plurality of reflective units 100 may form a group, and several groups may be formed if necessary.

The reflective unit 100 may be installed inside or outside the transparent lens unit 200. For example, as shown in FIG. 1, the reflective unit 100 may be buried (dented) and installed in the transparent lens unit 200. Alternatively, the reflective unit 100 may be attached to a front surface or a rear surface of the transparent lens unit 200.

The transparent lens unit 200 is an element through which visible rays pass, so that the user can see the real world through the transparent lens unit 200. Therefore, it is preferable that the transmittance of the visible rays is 100% to enable the user to clearly see the real world, however, the transparent lens unit 200 may be configured by selecting the transmittance of the visible rays according to the state of the user's eye (eyeball) or the application to be used.

In addition, when blocking ultraviolet rays (UV) is required, the transparent lens unit 200 may be configured to block the ultraviolet rays and transmit visible rays. When an eyesight correction is necessary due to the user's bad eyesight, an eyesight correction lens may be used.

The transparent lens unit 200 may be mainly formed of a glass, and may be formed of various kinds of plastics other than the glass.

In addition, the reflective lens module according to the present invention may be configured such that the reflective unit 100 is laminated on a base unit (not shown) formed of a hard material.

Any material having a certain degree of hardness to laminate the reflective unit 100 may be sufficient for the base unit. A glass may be used as a typical example, however, various types of synthetic resins other than the glass also may be used. The reflecting unit 100 may be formed of aluminum (Al) or silver (Ag) having a high reflectivity to reflect the virtual image outputted from the display unit 50. Besides, various types of metals, alloys or synthetic resins may be used. In addition, the reflective unit 100 may have a curved surface if necessary.

In addition, the reflective lens module according to the present invention may further include a frame unit (not shown). The frame unit is an element for fixing at least one reflective unit, in which the frame unit may be directly connected to the reflective unit 100 to fix the reflective unit 100. In the case that the transparent lens unit 200 is further included, the frame unit fixes the transparent lens unit 200, and the frame unit may indirectly fix the reflective unit 100 in a form that the reflective unit 100 is installed in the transparent lens unit 200.

Herein, the frame unit may be a user-wearable head mount device of glasses shape or other various shapes, alternatively, the frame unit may have other various shapes.

Although the invention has been described with the particulars such as specific components, the limited embodiments, and the drawings, which are provided only to help comprehensive understanding of the invention, and it is obvious to those skilled in the art that the invention is not limited to the embodiments and various changes and modifications in form and details may be made without departing from the spirit and scope of the invention.

Accordingly, the idea of the invention should not be determined by the aforementioned embodiments, and the following claims as well as all modifications or variations belonging to the equivalents of the claims will be within the scope of the invention.

## Claims

1. A reflective lens module for reflecting an image outputted from a display unit to provide the reflected image to a user, the reflective lens module comprising at least one reflective unit having a size of 4 mm or less for reflecting the image outputted from the display unit.

2. The reflective lens module of claim 1, further comprising a frame unit for fixing the at least one reflective unit.

3. The reflective lens module of claim 1, further comprising a transparent lens unit through which visible rays pass, wherein the at least one reflective unit is provided outside or inside the transparent lens unit.

4. The reflective lens module of claim 3, wherein the at least one reflective unit is buried and installed inside the transparent lens unit.

5. The reflective lens module of claim 1, wherein the at least one reflective unit is formed of a metal.

6. The reflective lens module of claim 1, wherein the at least one reflective unit is formed of an optical element.

7. The reflective lens module of claim 1, wherein the at least one reflective unit is formed in an edgeless shape.

8. The reflective lens module of claim 1, wherein the at least one reflective unit is formed in a circular or oval shape.

9. The reflective lens module of claim 1, wherein a surface of the at least one reflective unit is formed in a curved shape.
